# EUROPÄISCHE PATENTSCHRIFT

(11) **EP 2 012 253 B1**
(45) Veröffentlichungstag und Bekanntmachung des Hinweises auf die Patenterteilung: **19.08.2009**
(21) Anmeldenummer: 08104280.6
(22) Anmeldetag: 06.06.2008
(51) Int. Cl.: G06K 7/00, G01V 15/00

(54) **Auslesen von Informationen mit optoelektronischem Sensor und RFID-Leser**
Reading of information with optoelectronic sensor and RFID reader
Lecture d'informations à l'aide d'un capteur optoélectronique et d'un lecteur RFID

(30) Priorität: 02.07.2007 DE 102007030738
(43) Veröffentlichungstag der Anmeldung: 07.01.2009
(73) Patentinhaber: SICK AG, 79183 Waldkirch (DE)
(72) Erfinder: Weber, Harald, 77855 Achern (DE); Sotriffer, Ingomar, 80807 München (DE)
(74) Vertreter: Hehl, Ulrich

(56) Entgegenhaltungen:
- EP-A- 1 684 209
- DE-A1-0102004 012 22
- US-A1- 2002 104 013
- US-A1- 2006 290 472

## Beschreibung

Die Erfindung betrifft eine Vorrichtung und ein Verfahren zum Auslesen von Informationen mit einer Leseeinrichtung für Transponder nach dem Oberbegriff von Anspruch 1 beziehungsweise 11.

Zur Automatisierung von logistischen Bewegungen ist die möglichst fehlerfreie Identifikation und Lageüberwachung von Objekten und Waren erforderlich. Dies geschieht an Identifikationspunkten, vor allem bei einem Wechsel des Besitzers der Ware oder einem Wechsel des Transportmittels. Ein automatisierendes Identifikationssystem wird demnach beispielsweise bei einem Wareneingang eines Logistikzentrums installiert, um eingehende und ausgehende Waren zu verzeichnen. Dies führt zu schnellen und nachvollziehbaren Logistikbewegungen.

Ein herkömmliches Verfahren zur automatisierten Identifikation ist, bei Durchfahrt einer Ladeeinheit wie etwa einer Palette, den Kennzeichnungsträger oder das Etikett an dieser Ladeeinheit oder dem von ihr geförderten Objekt mit Hilfe von stationären Barcodesystemen zu identifizieren. Die Lesegeräte, also Barcodescanner, werden über eine vorgelagerte Kombination von Lichtschranken ausgelöst.

Seit einiger Zeit wird versucht, die optische Abtastung per Barcodeleser durch RFID-Leser (Radio Frequency Identification) zu ersetzen. Dabei ist an dem zu identifizierenden Objekt anstelle eines Barcodes ein Transponder angebracht. Solche Transponder können prinzipiell aktiv sein, also eine eigene Energieversorgung aufweisen und selbstständig elektromagnetische Strahlung erzeugen. In der Praxis eignen sich diese Transponder für die Logistik aber weniger, weil durch die Energieversorgung die Stückpreise solcher Transponder nicht das für den Massenmarkt erforderliche geringe Niveau erreichen können. Deshalb werden zumeist passive Transponder ohne eigene Energieversorgung eingesetzt. In beiden Fällen wird durch elektromagnetische Strahlung des Lesegerätes der Transponder zur Abstrahlung der gespeicherten Information angeregt.

Während es früher üblich war, eine Spule in den Transponder einzusetzen und ihn über induktive Kopplung auszulesen, werden inzwischen eher UHF-Transponder (Ultrahochfrequenz) eingesetzt, deren Antenne ein Dipol ist (Backscatter). Wenn hier und im Folgenden von Transponder und RFID-Leser die Rede ist, so soll dies aber unabhängig von der genauen Umsetzung der Technik verstanden werden.

Beim Einsatz von RFID-Lesern für die automatische Identifikation ergibt sich die Schwierigkeit, dass nicht unmittelbar klar ist, zu welchem Objekt eine ausgelesene Information eines Transponders gehört. Der Einsatz einer einfachen Lichtschranke vor dem RFID-Leser genügt nicht, weil die Lichtschranke weder die Bewegungsrichtung erkennen noch eine Entscheidung darüber treffen kann, ob ein Flurförderzeug mit voller oder leerer Ladeeinheit den Bereich durchfährt. Des Weiteren können auch Personen die Lichtschranken auslösen und damit zu Fehllesungen führen. Insoweit unterscheiden sich die Zuordnungsprobleme bei RFID-Lesern noch nicht von der herkömmlichen Lösung über Barcodescanner. Da aber RFID-Leser durch Reflexionen Transponder in Reichweiten erreichen können, welche über den Reichweiten ohne reflektierende Umgebung liegen, sogenannte "Überreichweiten", ist eine Zuordnung oft problematisch. Des Weiteren können sich die RFID-Leser bedingt durch die hohe Differenz von Sendeleistung und Empfangsempfindlichkeit gegenseitig bei der Auslesung der Transponder behindern. Das gilt insbesondere für Lagerhallen, in denen eine größere Anzahl von RFID-Lesern installiert ist.

In einer herkömmlichen Lösung werden die Triggerlichtschranken durch eine Kombination aus einem Lichtgitter und einer Radarsensorik ersetzt. Das Lichtgitter kann die Höhe eines zu dem RFID-Leser geförderten Objekts bestimmen und damit grob das Objekt klassifizieren, beispielsweise ein leeres von einem beladenen Flurförderzeug unterscheiden. Der Radarsensor misst die Bewegungsrichtung über den Doppeleffekt. Der konstruktive Aufwand ist recht hoch, nicht nur weil ein Radarsensor benötigt wird, sondern weil dieser auch noch auf einer Querstange oberhalb der durchfahrenden Objekte montiert sein muss, um die Bewegungsrichtung messen zu können.

Aus der DE 199 40 403 A1 ist bekannt, einen RFID-Leser mit einem optoelektronischen Sensor zu kombinieren, wobei der optoelektronische Sensor das auszulesende Objekt abtastet und dessen Geometrie bestimmt. Die von dem RFID-Leser ausgelesene Informationen aus dem Transponder des Objekts enthalten ebenfalls Geometrieeigenschaften des Objekts. Durch einen Vergleich dieser in dem Transponder enthaltenen und der von dem optoelektronischen Sensor gemessenen Geometrieeigenschaften können die Objekte identifiziert und zugeordnet werden. Dies erfordert aber, in den Transponder die Geometrieeigenschaften einzucodieren und zudem die Übertragung einer größeren Datenmenge, welche diese Geometrieeigenschaften mit beinhalten. Zudem gelingt es bei standardisierten Objektgeometrien, beispielsweise Paletten, auch nicht, eine aufgrund von Überreichweiten erfolgende falsche Zuordnung mit diesem Verfahren aufzulösen. Schließlich kann das herkömmliche Verfahren die Bewegungsrichtung des auszulesenden Objekts nicht feststellen. Insgesamt muss also ein recht hoher Aufwand betrieben werden, ohne damit die Zuordnungsprobleme wirklich umfassend lösen zu können.

Aus der EP 1 684 209 A2 ist eine Funkkommunikationsvorrichtung zum Auslesen von Funkmedien bekannt, welche an der Antenne der Funkkommunikationsvorrichtung vorbei gefördert werden. In einem Bereich vor Eintritt in den Lesebereich ist ein zusätzlicher Detektor vorgesehen, welcher als Kamera, als Lichtschranke oder als Metallentektor ausgebildet sein kann. Dieser Detektor erkennt Objekte, an denen ein Funkmedium angebracht ist, und auf Basis dieser Information wird das Zeitverhalten der Sendeaufforderungen gesteuert. Damit soll vor allem bei hohen Geschwindigkeiten sichergestellt werden, dass der Lesevorgang abgeschlossen werden kann, ehe ein Objekt den Lesebereich wieder verlassen hat.

Die US 2002/0104013 A1, die den Oberbegriff der unabhängigen Ansprüche bildet, offenbart einen Portalscanner, welcher bei Durchtritt von Objekten oder Personen eine RFID-Information auszulesen versucht und somit erkennt, ob das Objekt oder die Person ein RFID-Tag trägt oder nicht. Der Portalscanner ist mit zwei vertikalen Reihen von Infrarotsensoren ausgestattet und ermittelt anhand der Aktivierungsreihenfolge die Bewegungsrichtung des Objekts oder der Person.

Schließlich ergibt sich eine weitere Schwierigkeit beim Einsatz einer großen Anzahl von RFID-Lesern in räumlicher Nähe zueinander daraus, dass nach der zu Grunde liegenden Norm EN 302 208 nur eine begrenzte Anzahl von Frequenzkanälen verfügbar ist, nämlich fünf Kanäle mit niedriger Leistung und 10 Kanäle mit einer Leistung von bis zu 2 W, was unter den gegebenen Werten für Sendeleistung und Grenzwert für die Kanalfreigabe einer Reichweite von bis zu 80 km entspricht. Sind mehr RFID-Leser gleichzeitig aktiv, muss jeweils nach einem freien Kanal gesucht werden und zudem treten durch die Überreichweite massive Zuordnungsprobleme auf. Durch die anvisierte Umstellung der Norm EN 302 208 würden sich die Regeln der Kanalfreigabe ändern, aber die Problematik bleibt dennoch grundsätzlich bestehen.

Es ist daher Aufgabe der Erfindung, das Auslesen eines Transponders bei eindeutiger Zuordnung zu dem zugehörigen Objekt mit möglichst geringem Aufwand zu ermöglichen.

Diese Aufgabe wird durch eine Vorrichtung gemäß Anspruch 1 und ein Verfahren gemäß Anspruch 11 gelöst. Indem der optoelektronische Sensor ein Bewegungsmuster des Objekts bestimmen kann, lässt sich eindeutig feststellen, ob dieses Objekt die betreffende Leseeinrichtung passiert hat. Nur in diesem Fall werden die gelesenen Informationen auch ausgewertet. Dadurch lassen sich Fehllesungen drastisch reduzieren oder ganz vermeiden. Der Vorteil der erfindungsgemäßen Lösung liegt nicht nur in der somit stark verbesserten Leserate, sondern auch in einer schnelleren Auswertung und Übertragung der Informationen, weil nur noch relevante Daten ausgewertet werden müssen und viele Informationen bereits durch Messungen des optoelektronischen Sensors ausgefiltert werden. Die Erfindung eignet sich daher auch besonders für ansprunchsvollere Logistikanwendungen, bei denen eine große Anzahl von RFID-Lesern eingesetzt wird.

Die Erfindung beruht dabei auf dem Prinzip, mögliche Fehllesungen direkt an der Quelle zu unterdrücken. Durch Einsatz eines leistungsfähigeren, aber immer noch kostengünstigen optoelektronischen Sensors, der die herkömmlichen Lichtschranken ersetzt, kann die anfällige und aufwändige Verarbeitung zahlreicher RFID-Informationen bereits im Vorfeld auf ein handhabbares Maß reduziert werden.

Vorteilhafterweise ist die Steuerung dafür ausgebildet, die Leseeinrichtung nur dann zu aktivieren, wenn das Objekt das vorgegebene Bewegungsmuster wenigstens teilweise ausführt. Wie einleitend gesagt, ist die Zahl der zur Verfügung stehenden Kanäle begrenzt. Wenn jeder RFID-Leser nur einen kleinen Teil der Zeit aktiv ist, nämlich während er tatsächlich relevante Information zu lesen hat, wird diese knappe Ressource der zur Verfügung stehenden Kanäle zielgerichtet und effektiv ausgenutzt. Das beschleunigt die Lesevorgänge, weil nicht nach einem freien Kanal gesucht werden muss und schneidet die Möglichkeit von Fehllesungen aufgrund der Überreichweite der Leseeinrichtungen in einem signifikanten Maße ab. Die Anzahl der ohne Abstimmungsprobleme nebeneinander einsetzbaren RFID-Lesern kann damit wesentlich höher ausfallen.

Bevorzugt weist das vorgegebene Bewegungsmuster eine Bewegungsrichtung auf. Über die Bewegungsrichtung lässt sich bereits eine große Anzahl von Bewegungsmustern erkennen, die eine Fehllesung auslösen könnten. Dazu zählt der Durchgang durch ein Lesetor in der falschen Richtung, aber auch eine Bewegungsumkehr vor, während oder nach dem eigentlichen Lesevorgang.

In einer vorteilhaften Weiterbildung ist die Steuerung dafür ausgebildet, ausgelesene Informationen zu verwerfen, wenn das Objekt das vorgegebene Bewegungsmuster nicht vollständig ausführt. Die Entscheidung, ob ein Objekt überhaupt auszulesen ist, sollte dann fallen, wenn das Objekt sich in großer räumlicher Nähe der Leseeinrichtung befindet. Wenn aber danach das Bewegungsmuster nicht vervollständigt wird, würden diese ausgelesenen Informationen zu einer Fehllesung führen. Indem falsche Daten von vorneherein verworfen werden, ist diese Gefahr ausgeschlossen.

Bevorzugt ist der optoelektronische Sensor und/oder die Steuerung für die Bestimmung einer Geometrieklasse ausgebildet, wobei insbesondere jeweils eine Person, eine beladene oder eine unbeladene Ladeeinheit wie eine Palette eine Geometrieklasse bildet. Neben dem Bewegungsmuster wird hiermit die Geometrieklasse als zweites Kriterium für die Entscheidung herangezogen, ob eine Lesung vorzunehmen ist. Im Normalfall soll weder eine unbeladene Palette noch eine Person eine Lesung auslösen. Weiterhin ist möglich, ein Lesetor speziell für bestimmte Objektklassen einzurichten, so dass es beispielsweise nur Pakete einer bestimmten Größe ausliest und alles andere passieren lässt, ohne dies zu registrieren. Erneut kann auf diese Weise die Fehlerrate reduziert werden.

Noch bevorzugter ist die Steuerung dafür ausgebildet, die Leseeinrichtung nur für Objekte einer vorgegebenen Geometrieklasse zu aktivieren und/oder nur die ausgelesene Information eines Objekts einer vorgegebenen Geometrieklasse auszuwerten. Auf diese Weise wird die Geometrieinformation mit unmittelbarem zeitlichen Bezug zu der Lesung ausgewertet und ein Objekt mit einer als irrelevant eingestuften Geometrie entweder gar nicht erst ausgelesen, indem die Leseeinrichtung deaktiviert bleibt, oder zumindest unmittelbar verworfen.

In einer bevorzugten Ausführungsform ist der optoelektronische Sensor ein Laserscanner, der insbesondere eine in Felder eingeteilte Überwachungsebene überwachen kann. Ein solcher Laserscanner ist in der Lage, die Position eines Objektes anhand der Entfernung und des Scanwinkels zu bestimmen, welches sich der Leseeinrichtung annähert. Damit kann das Bewegungsmuster wahlweise als fein aufgelöste Trajektorie, alternativ aber auch zur einfacheren Auswertung und Klassifizierung des Bewegungsmusters nur über eine Anzahl vordefinierter Felder bestimmt und/oder bewertet werden. Felder sind in der Arbeitsebene von Laserscannern in der geometrischen Form frei definierbare Bereiche. Diese Bereiche werden innerhalb ihrer Konturen auf Objekte überprüft. Sind innerhalb der gewählten Kontur Objekte vorhanden, können diese über entsprechende Interfaces angezeigt werden, wie Schaltausgänge oder Telegramme.

Noch bevorzugter ist dabei das Bewegungsmuster über eine Reihenfolge der von dem Objekt nacheinander berührten Felder und/oder die Geometrieklasse anhand der gleichzeitig von dem Objekt überstrichenen Felder festgelegt. Für viele Anwendungen genügt es, lediglich in dieser Weise grobere Informationen über Bewegung und Geometrie aufzuzeichnen. Dies erleichtert die Zuordnung zu einer Bewegungsklasse oder einer Geometrieklasse und reduziert damit die Fehlerrate und den Auswertungsaufwand.

In einer besonderen Ausführungsform ist dabei das vorgegebene Bewegungsmuster durch das Eintreten in ein erstes Feld, den Übergang zunächst in ein zweites Feld und dann in ein drittes Feld und das Verlassen des dritten Feldes festgelegt, wobei insbesondere die Steuerung dafür ausgebildet ist, die Leseeinrichtung erst bei Übergang in das zweite Feld zu aktivieren und/oder die ausgelesene Information zu verwerfen, wenn nach Aktivierung der Leseeinrichtung das Objekt nicht zunächst in das dritte Feld übergeht und dieses anschließend verlässt. In dieser Ausführungsform genügt also die Überwachung von lediglich drei Feldern. Damit lässt sich bereits zuverlässig feststellen, ob ein Objekt tatsächlich in den Lesebereich eingetreten ist und ob es diesen auch in der richtigen Richtung wieder verlassen hat. Die Leseeinrichtung wird dann und nur dann aktiviert, wenn ein Objekt aus der richtigen Richtung in ihre Nähe kommt, und sofern das Objekt danach das Bewegungsmuster nicht vervollständigt und auf der gegenüberliegenden Seite aus dem Lesetor heraustritt, werden die ausgelesene Informationen verworfen, da sie irrelevant sind.

Vorteilhafterweise ist die Steuerung dafür ausgebildet, den Fahrweg von Objekten tragenden Fahrzeugen mittels eines Transponders des Fahrzeugs zu ermitteln und aufzuzeichnen. Nicht nur die Objekte selbst, also in gewöhnlichen Logistikanwendungen die Waren, sondern auch die Transportmittel sind hier mit einem Transponder versehen. Für die zentrale Steuerung der Logistikhalle erleichtert es die Planung, wenn die Positionen der Transportmittel zu jedem Zeitpunkt bekannt sind.

In einer weiteren vorteilhaften Ausführungsform weist die Steuerung einen Speicher für ausgelesene Informationen auf und ist dafür ausgebildet, ausgelesene Informationen zu verwerfen, wenn sie identisch zu bereits früher ausgelesenen Informationen sind. In diesem Fall ist nämlich anzunehmen, dass der aktuelle gelesene Transponder aufgrund von Überreichweite gelesen wird und sich gar nicht in dem Lesetor befindet. Eine Ausnahme hierbei ist, wenn der Transponder sich an einem Transportmittel befindet, diese Transportmittel sind der Steuerung bekannt und werden von dieser vorteilhaften Weiterbildung ausgenommen.

Bevorzugt sind mehrere optische Sensoren, insbesondere mehrere Laserscanner vorgesehen, und diese Sensoren weisen Felder in zumindest zwei nebeneinander liegenden Reihen zur Erkennung komplexerer Bewegungsmuster und/oder in zumindest zwei nebeneinander liegenden Ebenen zur Erkennung komplexerer Geometrieklassen auf. Damit lassen sich Lesetore realisieren, bei denen auch die Bewegungsmuster von nebeneinander das Lesetor passierenden Objekten überwacht werden können. Im Falle übereinander liegender Ebenen lässt sich beispielsweise nicht nur erkennen, ob eine Palette beladen ist, sondern auch wie hoch sie beladen ist.

In all diesen Fällen wurde immer nur ein Objekt angesprochen. Es ist erfindungsgemäß jedoch auch möglich, dass ein Transportmittel eine Vielzahl von Objekten fördert, die jeweils einen Transponder aufweisen. Diese Transponder können dann gleichzeitig oder nacheinander ausgelesen werden, während sie die Nähe der Leseeinrichtung passieren.

Das erfindungsgemäße Verfahren kann auf ähnliche Weise durch weitere Merkmale ausgestaltet werden und zeigt dabei ähnliche Vorteile. Derartige weitere Merkmale sind in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische dreidimensionale Darstellung eines Lesetors in einer Ausführungsform der erfindungsgemäßen Vorrichtung mit einer Leseeinrichtung und einem optoelektronischen Sensor;
- Fig. 2: eine Draufsicht auf das Lesetor gemäß Figur 1;
- Fig. 3: eine Draufsicht auf eine zweite Ausführungsform der Erfindung mit einer durch einen Bogen begrenzten Überwachungsebene des optoelektronischen Sensors;
- Fig. 4: eine Draufsicht auf eine dritte Ausführungsform der Erfindung mit zwei gegenüber angeordneten optoelektronischen Sensoren und deren doppelter Reihe von Überwachungsfeldern; und
- Fig.5: eine schematische dreidimensionale Darstellung einer vierten Ausführungsform der Erfindung mit zwei übereinander angeordneten optoelektronischen Sensoren und deren übereinander angeordneten Überwachungsebenen.

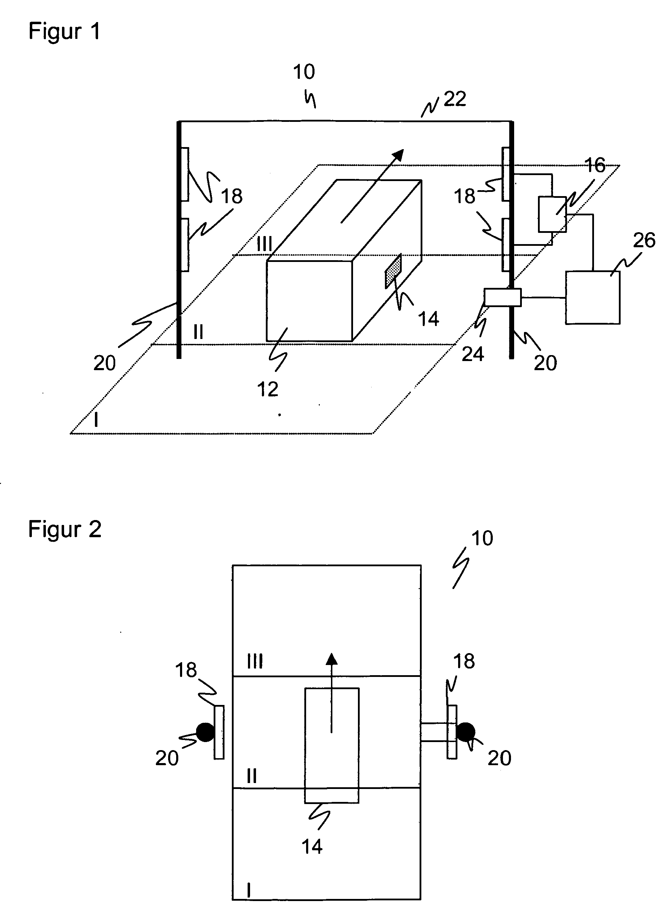

Figur 1 zeigt in schematischer dreidimensionaler Darstellung und Figur 2 in Draufsicht eine erste Ausführungsform einer erfindungsgemäßen Vorrichtung zum Auslesen von Informationen zur Identifikation eines Objektes 12, beispielsweise eine Palette, ein Paket oder eine beliebige Ware (logistische Einheit), das einen die Informationen enthaltenden Transponder 14 trägt. Dazu strahlt eine Leseeinrichtung 16 ein elektromagnetisches Feld über Antennen 18 ab, welches entweder den Transponder 14 dazu anregt, die gespeicherten Informationen aktiv abzustrahlen oder welches in dem Transponder 14 verändert wird, wobei diese Veränderung oder die zurückgestrahlten Informationen wiederum über die Antennen 18 erkannt werden. Diese Art des Auslesens eines Transponders 14, auch RFID-Tag genannt, über eine entsprechende Leseeinrichtung 16 bzw. einen RFID-Leser ist prinzipiell bekannt und die Erfindung setzt keine besondere Implementierung der RFID-Technik voraus. In einer bevorzugten Ausführungsform wird aber die Ultrahochfrequenz-RFID-Technik mit einem Backscatter-Transponder eingesetzt.

Die Vorrichtung 10 bildet als Ganzes ein Lesetor, an dessen seitlichen Pfosten 20 die Antennen 18 angebracht sind. Die ebenfalls dargestellte Querstrebe 22 verbindet die Antennen 18 zu beiden Seiten elektrisch. Eine solche Querstrebe 22 ist aber nicht zwingend erforderlich. Die elektrische Verbindung zwischen den Antennen 18 und zu der Leseeinrichtung 16 kann auch auf andere Weise erfolgen, beispielsweise durch eine einfache am Boden verlegte Leitung oder auch drahtlos. Ohne diese Querstrebe 22 nimmt das Lesetor 10 deutlich weniger Raum ein, kann daher von durchfahrenden Objekten nicht beschädigt werden und ist leichter zu montieren oder zu demontieren.

An einem seitlichen Pfosten 20 ist ein optoelektronischer Sensor 24 angebracht. Der Sensor 24 überwacht in seinem Sichtbereich den Durchgangsbereich durch das Lesetor 10. Er ist in der Lage, die Position des Objekts 12 zu ermitteln. In der dargestellten Ausführungsform ist dieser Sensor ein Laserscanner, dessen Abtaststrahl bei bekanntem Winkel auf das Objekt 12 trifft und auch erkennen kann, in welcher Entfernung dies geschieht. Dazu wird die Lichtlaufzeit von Sensor 24 zu Objekt 12 und zurück gemessen. Der Sichtbereich des Sensors 24 ist eine Ebene, die bevorzugt waagerecht liegt und in Felder I-III eingeteilt wird. In einer vereinfachten Ausführungsform bestimmt dann der Sensor 24 nicht die exakte Lage des Objekts 12, sondern nur, in welchem der Felder I-III das Objekt 12 aktuell liegt. Als Alternative zu einem Laserscanner kann der Sensor 24 beispielsweise auch eine Kamera sein, welche mittels einer Bildauswertung ebenfalls in der Lage ist, die Position des Objekts 12 oder das Feld I-III zu bestimmen, in dem das Objekt 12 liegt.

Sowohl die Leseeinrichtung 16 wie der Sensor 24 sind an eine Steuerung 26 des Lesetors 10 angeschlossen. Alternativ kann die Steuerung 26 Teil des Sensors 24 oder Teil des RFID-Lesers 16 sein. Der Sensor 24 übermittelt die genau Position des Objekts 12 oder das aktuell von dem Objekt 12 besetzte Feld I-III an die Steuerung 26. Zusätzlich kann der Sensor 24 dafür ausgebildet sein, die Kontur des Objekts 12 geometrisch zu vermessen und diese Daten ebenfalls an die Steuerung 26 zu übermitteln. Der RFID-Leser 16 kann von der Steuerung 26 angesprochen werden, um den Transponder 14 auszulesen und die so ermittelten Informationen an die Steuerung 26 zurückzugeben.

Das erfindungsgemäße Ausleseverfahren in der Vorrichtung 10 läuft dann wie folgt ab. Das Objekt 12 bewegt sich in der durch den Pfeil angedeuteten Richtung durch das Lesetor 10. Dazu kann das Objekt 12 auf einem in den Figuren nicht dargestellten Fahrzeug angeordnet sein. Dieses Fahrzeug oder Transportmittel kann seinerseits einen Transponder 14 aufweisen, der von einem RFID-Leser ausgelesen wird und damit zu jeder Zeit ermöglicht, die Position des Transportmittels zu kennen und damit dessen Fahrweg nachzuverfolgen. Sobald das Objekt 12 in Sichtweite des Sensors 24 gelangt, stellt dieser Sensor 24 die Position des Objekts 12 fest und meldet Positionsdaten so lange an die Steuerung 26, wie das Objekt 12 sich im Sichtbereich aufhält. Diese Positionsdaten können dreidimensionale Koordinaten im Raum sein, aber auch lediglich das aktuell von dem Objekt 12 belegte Feld I-III. Zusätzlich kann der Sensor 24 eine Kontur des Objekts 12 bestimmen.

Die Steuerung 26 vergleicht die von dem Sensor 24 gemeldete Bewegung des Objekts 12 mit einem vorgegebene Bewegungsmuster. Auf ein bestimmtes Bewegungsmuster hin aktiviert die Steuerung 26 die Leseeinrichtung 16. Die Leseeinrichtung 16 regt den Transponder 14 zur Abstrahlung der dort gespeicherten Identifikationsinformationen an und gibt diese Informationen an die Steuerung 26 zurück. In einer bevorzugten Ausführungsform ist das Bewegungsmuster, welches zur Aktivierung der Leseeinrichtung 16 führt, eine Bewegung des Objekts 12 aus einer bestimmten Richtung unter das Lesetor 10 in unmittelbarer Nähe zu der Leseeinrichtung 16. Nach dem Auslesen durch die Leseeinrichtung 16 vergleicht die Steuerung 26 weiterhin die von dem Sensor 24 übermittelte Bewegung mit dem vorgegebene Bewegungsmuster. Stimmen diese nicht überein, so wird die ausgelesene Information verworfen. Bei der soeben angesprochenen bevorzugten Ausführungsform ist das vorgegebenen Bewegungsmuster die Weiterbewegung des Objekts 12 durch das Lesetor 10 hindurch auf die andere Seite und das anschließende Verlassen des Lesetors 10.

Somit werden die Informationen aus dem Transponder 14 bei einer abweichenden Bewegung des Objekts 12 von der erwarteten Bewegung entweder gar nicht erst ausgelesen oder zumindest nicht ausgewertet. Der RFID-Leser 16 ist nur aktiv, wenn ein von ihm zu identifizierendes Objekt 12 in der vorgegebenen Leseposition ist. Dadurch wird das Zeitfenster klein gehalten, innerhalb dessen andere Objekte als das Objekt 12 in größerer Entfernung, deren Information gar nicht gelesen werden soll, zu Zuordnungsfehlern führen könnten.

Zusätzlich zu dem Vergleich mit einem vorgegebenen Bewegungsmuster ist die Steuerung 26 auch in der Lage, geometrische Informationen über das Objekt 12 auszuwerten. Dies kann über eine fein aufgelöste Konturlinie des Objekts 12, aber auch über eine vergleichsweise grobe Geometrieinformation anhand der gleichzeitig von dem Objekt 12 überstrichenen Felder I-III beurteilt werden. Damit unterscheidet die Steuerung 26 zwischen Objekten 12, die gelesen werden sollen und Störobjekten, wie vorbeigehendem Bedienpersonal oder leeren Paletten. Wird ein solches Störobjekt erkannt, so bleibt die Leseeinrichtung 16 deaktiviert oder die von ihr ausgelesenen Informationen werden verworfen.

Bei einer typischen beispielhaften Anwendung, die auf den Feldern I-III eines Laserscanners 24 basiert, ist die erwartete vorgegebene Bewegung zunächst der Eintritt des Objekts 12 in das Feld I, das anschließend das Feld I in Richtung Feld II verlässt. Nur auf diese Sequenz Feld I - Feld II hin wird der RFID-Leser 16 aktiviert und der Transponder 14 ausgelesen. Verlässt das Objekt 12 Feld I in eine andere Richtung als nach Feld II, so bleibt die Leseeinrichtung 16 deaktiviert. Nur wenn das Objekt 12 Feld II nach Feld III verlässt und anschließend auch Feld III verlässt, wird die ausgelesene Information von der Steuerung 26 dem Objekt 12 zugeordnet. Bewegt sich das Objekt von Feld II nach Feld I, so wird die ausgelesene Information verworfen. Bei einer Bewegung von Feld III nach Feld II geschieht zunächst nichts, da abzuwarten bleibt, ob Feld II in Richtung Feld I verlassen wird - in diesem Fall wird die gelesene Information verworfen - oder ob das Bewegungsmuster in einem weiteren Anlauf doch noch vollendet wird und die Zuordnung vorgenommen werden kann.

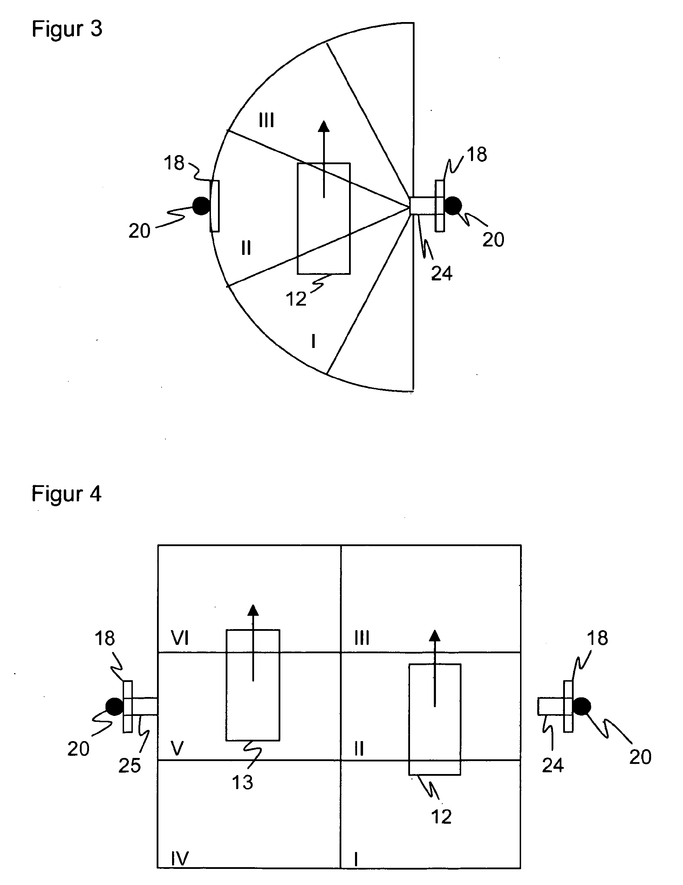

Figur 3 stellt eine zweite Ausführungsform der Erfindung in der Draufsicht dar. In allen Figuren bezeichnen gleiche Bezugszeichen die gleichen Merkmale. Diese zweite Ausführungsform unterscheidet sich von der ersten Ausführungsform darin, dass die Überwachungsebene durch einen Bogen begrenzt ist, der im dargestellten Fall einen Halbkreis beschreibt. Die Felder I-III sind ebenfalls keine Rechtecke, sondern Kreissegmente. Für den Laserscanner ist es wesentlich einfacher, derartige Felder I-III zu überwachen, weil das Segment alleine durch den Scanwinkel bestimmt ist. Das Leseverfahren ist das gleiche, das im Zusammenhang mit der ersten Ausführungsform und den Figuren 1 und 2 beschrieben worden ist. Prinzipiell ist jede weitere Definition von Feldern möglich, um ein vorgegebenes Bewegungsmuster zu definieren. Das hängt von der Anwendung, geforderten Einfachheit der Auswertung und der Genauigkeit der vorzuschreibenden Bewegung ab, die einen Lesevorgang auslösen soll. Es wird ausdrücklich betont, dass ein Laserscanner beliebige Formen der Felder, also Kreissegmente, Rechtecke oder andere, erkennen und überwachen kann, indem die über Winkel und Entfernung gemessenen Polarkoordinaten verwendet werden, welche die Überwachungsebene vollständig überstreichen.

Figur 4 zeigt in Draufsicht eine dritte Ausführungsform der Erfindung, bei der zu beiden Seiten des Lesetors 10 ein optoelektronischer Sensor 24, 25 montiert ist. Für die hier verwendete größere Zahl von Feldern I-VI wäre ein zweiter optoelektronischer Sensor 25 nicht erforderlich, da der optoelektronische Sensor 24 auch die Entfernung des Objektes 12 kennt und somit eine entsprechende Einteilung allein vornehmen könnte. Nur mit einem zweiten optoelektronischen Sensor 25 ist aber möglich, Bewegungen eines zweiten Objekts 13 zu verfolgen, das sich gegenüber dem ersten optoelektronischen Sensor 24 im Schatten befindet und nur von dem zweiten optoelektronischen Sensor 25 gesehen werden kann. Somit können auch zwei nebeneinander durch das Lesetor 10 bewegte Objekte 12, 13 durch dieselbe Leseeinrichtung 16 bei eindeutiger Zuordnung von Objekt 12, 13 zu den ausgelesene Information identifiziert werden.

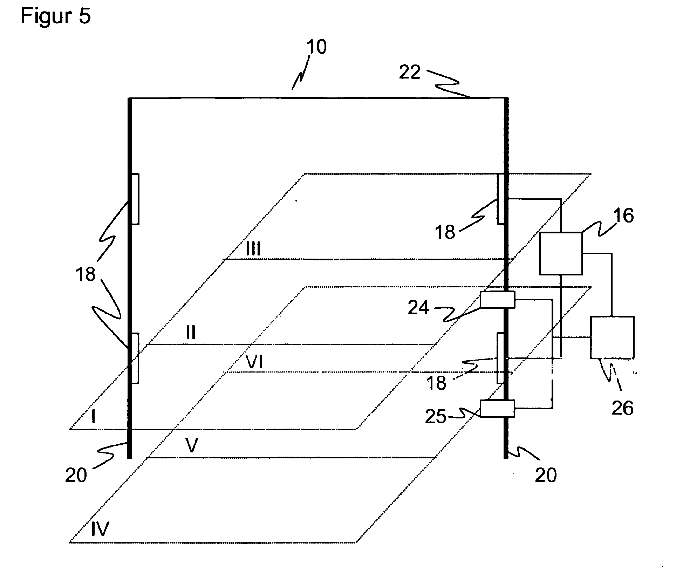

In einer vierten Ausführungsform, die in Figur 5 schematisch dreidimensional dargestellt ist, sind zwei optoelektronische Sensoren 24, 25 übereinander angeordnet. Auf diese Weise ist es möglich, in der Höhendimension genauere Informationen über die Objektgeometrie zu erhalten und somit besser zwischen zu lesenden und nicht zu lesenden Objekten zu unterscheiden. Ein Anwendungsfall ist die besonders zuverlässige Bestimmung des Beladungsgrades einer Palette.

Aufgrund des überwachten Bewegungsmusters und der Objektgeometrie treten Zuordnungsfehler zwischen ausgelesener Informationen aus dem Transponder 14 und dem zugehörigen Objekt 12 nur noch wesentlich seltener auf. Dennoch ist nicht auszuschließen, dass in dem Moment, in dem die Leseeinrichtung 16 wegen eines erkannten Bewegungsmusters aktiviert ist, sich auch noch ein weiterer Transponder in Lesereichweite befindet. Um den hieraus entstehenden Fehlern zu begegnen, kann die Steuerung 26 bisher gelesene Informationen aus früheren Transpondern 14 speichern und mit einer aktuell ausgelesenen Information vergleichen. Wird dann ein Transponder bei mehreren Durchfahrten erfasst, so kann dies softwaremäßig erkannt und aussortiert werden, sofern es sich nicht um den Transponder eines Transportmittels handelt, welchem mehrere Durchfahrten erlaubt sind.

Obwohl in den Figuren jeweils nur ein Objekt 14 dargestellt ist, kann es sich hierbei um eine logistische Einheit wie eine Palette handeln, auf der eine größere Anzahl von Objekten angeordnet sind, die jeweils eigene Transponder tragen. Die Leseeinrichtung 16 ist dann in einer Lage, alle diese Transponder auszulesen und die somit identifizierten Objekte der Palette zuzuordnen.

Es gibt über die beschriebenen Transponder an Waren und Fahrzeugen hinaus auch noch statische Transponder, die also fix an einem Ort angebracht sind, wie etwa einer Maschine, einem Regal oder dergleichen. Solche statischen Transponder durchlaufen keine Felder oder Trajektorien und werden daher erfindungsgemäß von der Auswertung ausgeschlossen. Einfacher ist es, geeignete Filter vorzusehen, welche den Transponder als statisch erkennen, weil er beispielsweise länger als eine gewisse Mindestzeit gelesen wird und ihn somit von vorneherein als nicht relevant auszuschließen. Dazu können Informationen über oder von statischen Transpondern in dem genannten oder einem weiteren Speicher der Steuerung abgelegt werden, um sie effektiv ausfiltern zu können.

Insgesamt gelingt es erfindungsgemäß, die einzelnen RFID-Systeme nur dann aktiv zu halten, wenn sie wirklich benötigt werden, und nur solche Objekte auszulesen, die in eine vorgegebene Leseposition gebracht werden und aufgrund ihres Bewegungsmusters auch tatsächlich ausgelesen werden sollen. Zusätzlich wird über Geometrieeigenschaften sichergestellt, dass grundsätzlich nur auszulesende Objekte, wie etwa eine beladene Palette oder was immer als relevantes Objekt definiert ist, vom RFID-System registriert werden. Dadurch wird gerade in komplexeren Anwendungen mit einer größeren Anzahl von RFID-Lesern der Auswertungsaufwand ganz erheblich reduziert und gleichzeitig die Leserate erhöht, also die Identifizierung des jeweils richtigen Objektes.

## Patentansprüche

1. Vorrichtung (10) zum Auslesen von Informationen aus einem an einem Objekt (12) angeordneten Transponder (14), welche einen optoelektronischen Sensor (24), eine Leseeinrichtung (16), die den Transponder (14) zum Abstrahlen der Informationen anregen und die abgestrahlte Information auslesen kann, und eine Steuerung (26) aufweist, welche für eine Ansteuerung der Leseeinrichtung (16) und des Sensors (24) sowie eine Auswertung der ausgelesenen Informationen ausgebildet ist, wobei der optoelektronische Sensor (24) dafür ausgebildet ist, ein Bewegungsmuster des Objekts (12) zu bestimmen,
**dadurch gekennzeichnet,**
**dass** die Steuerung (26) dafür ausgebildet ist, die ausgelesenen Informationen nur bei Objekten (12) eines vorgegebenen Bewegungsmusters auszuwerten und dass der optoelektronische Sensor (24) ein Laserscanner ist, der für eine Überwachung einer in Felder (I-VI) eingeteilten Überwachungsebene ausgebildet ist, wobei das Bewegungsmuster über eine Reihenfolge der von dem Objekt (12) nacheinander berührten Felder (I-VI) festgelegt ist.

2. Vorrichtung (10) nach Anspruch 1,
wobei die Steuerung (26) dafür ausgebildet ist, die Leseeinrichtung (16) nur dann zu aktivieren, wenn das Objekt (12) das vorgegebene Bewegungsmuster wenigstens teilweise ausführt und/oder wobei die Steuerung (26) einen Speicher für ausgelesene Informationen aufweist und dafür ausgebildet ist, ausgelesene Informationen zu verwerfen, wenn sie identisch zu bereits früher ausgelesenen Informationen sind.

3. Vorrichtung (10) nach Anspruch 1 oder 2,
wobei das vorgegebene Bewegungsmuster eine Bewegungsrichtung aufweist.

4. Vorrichtung (10) nach einem der vorhergehenden Ansprüche,
wobei die Steuerung (26) dafür ausgebildet ist, ausgelesene Informationen zu verwerfen, wenn das Objekt (12) das vorgegebene Bewegungsmuster nicht vollständig ausführt.

5. Vorrichtung (10) nach einem der vorhergehenden Ansprüche,
wobei der optoelektronische Sensor (24) und/oder die Steuerung (26) für die Bestimmung einer Geometrieklasse ausgebildet ist, und wobei insbesondere jeweils eine Person, eine beladene oder eine unbeladene Ladeeinheit wie eine Palette eine Geometrieklasse bildet.

6. Vorrichtung (10) nach Anspruch 5,
wobei die Steuerung (26) dafür ausgebildet ist, die Leseeinrichtung nur für Objekte (12) einer vorgegebenen Geometrieklasse zu aktivieren und/oder nur die ausgelesenen Informationen eines Objekts (12) einer vorgegebenen Geometrieklasse auszuwerten.

7. Vorrichtung (10) nach Anspruch 5 oder 6,
wobei die Geometrieklasse anhand gleichzeitig von dem Objekt (12) überstrichener Felder (I-VI) festgelegt ist.

8. Vorrichtung (10) nach einem der vorhergehenden Ansprüche,
wobei das vorgegebene Bewegungsmuster durch das Eintreten in ein erstes Feld (I), den Übergang zunächst in ein zweites Feld (II) und dann in ein drittes Feld (III) und das Verlassen des dritten Feldes (III) festgelegt ist, wobei insbesondere die Steuerung (26) dafür ausgebildet ist, die Leseeinrichtung (16) erst bei Übergang in das zweite Feld (II) zu aktivieren und/oder die ausgelesene Information zu verwerfen, wenn nach Aktivierung der Leseeinrichtung (16) das Objekt (12) nicht zunächst in das dritte Feld (III) übergeht und dieses anschließend verlässt.

9. Vorrichtung (10) nach einem der vorhergehenden Ansprüche,
wobei die Steuerung (26) dafür ausgebildet ist, den Fahrweg von Objekten (12) tragenden Fahrzeugen mittels eines Transponders (14) des Fahrzeugs zu ermitteln und aufzuzeichnen.

10. Vorrichtung (10) nach einem der vorhergehenden Ansprüche,
wobei mehrere optische Sensoren (24, 25), insbesondere mehrere Laserscanner vorgesehen sind, und diese Sensoren Felder (I-VI) in zumindest zwei nebeneinanderüegenden Reihen (I-III; IV-VI) zur Erkennung komplexerer Bewegungsmuster und/oder in zumindest zwei übereinanderliegenden Ebenen (I-III; IV-VI) zur Erkennung komplexerer Geometrieklassen aufweisen.

11. Verfahren zum Auslesen von Informationen aus einem an einem Objekt (12) angeordneten Transponder (14) mittels einer Leseeinrichtung (16), die den Transponder (14) zum Abstrahlen der Informationen anregt und die abgestrahlte Information ausliest, wobei mittels eines optoelektronischen Sensors (24) ein Bewegungsmuster des Objekts (12) bestimmt wird,
**dadurch gekennzeichnet,**
**dass** die ausgelesenen Informationen nur bei Objekten (12) eines vorgegebenen Bewegungsmusters, insbesondere einer vorgegebenen Bewegungsrichtung ausgewertet werden und dass der optoelektronische Sensor (24) ein Laserscanner ist, dessen Sichtbereich in Felder eingeteilt wird, wobei das Bewegungsmuster über eine Reihenfolge der von dem Objekt (12) nacheinander berührten Felder festgelegt wird.

12. Verfahren nach Anspruch 11,
wobei die Leseeinrichtung (16) nur dann aktiviert wird, wenn das Objekt (12) das vorgegebene Bewegungsmuster wenigstens teilweise ausführt und/oder ausgelesene Informationen verworfen werden, wenn das Objekt (12) das vorgegebene Bewegungsmuster nicht vollständig ausführt und/oder wobei die ausgelesenen Informationen verworfen werden, wenn sie identisch zu gespeicherten bereits früher ausgelesenen Informationen sind.

13. Verfahren nach Anspruch 11 oder 12,
wobei die Leseeinrichtung nur für Objekte (12) einer vorgegebenen Geometrieklasse aktiviert wird und/oder nur die ausgelesene Information eines Objekts (12) einer vorgegebenen Geometrieklasse ausgewertet wird, wobei insbesondere jeweils eine Person, eine beladene oder eine unbeladene Ladeeinheit wie eine Palette eine Geometrieklasse bildet und die Geometrieklasse anhand der gleichzeitig von dem Objekt (12) überstrichenen Felder festgelegt wird.

14. Verfahren nach Anspruch 13,
wobei unter Einsatz einer Mehrzahl optoelektronischer Sensoren Felder in zumindest zwei nebeneinanderliegenden Reihen zur Erkennung komplexerer Bewegungsmuster und/oder in zumindest zwei Ebenen zur Erkennung komplexerer Geometrieklassen vorgesehen sind.

15. Verfahren nach Anspruch 14,
wobei das vorgegebene Bewegungsmuster durch das Eintreten in ein erstes Feld, den Übergang zunächst in ein zweites Feld und dann in ein drittes Feld und das Verlassen des dritten Feldes festgelegt wird, wobei insbesondere die Leseeinrichtung erst bei Übergang in das zweite Feld aktiviert wird und/oder die ausgelesene Information verworfen wird, wenn nach Aktivierung der Leseeinrichtung das Objekt nicht zunächst in das dritte Feld übergeht und dieses anschließend verlässt.

## Claims

1. A device (10) for the reading out of information from a transponder (14) arranged at an object (12), comprising an optoelectronic sensor (24), a reading device (16) able to excite the transponder (14) to radiate the information and able to read out the radiated information, and a control (26) which is made for a control of the reading device (16) and of the sensor (24) as well as for an evaluation of the read out information, wherein the optoelectronic sensor (24) is made to determine a movement pattern of the object (12),
**characterized in that**
the control (26) is made to evaluate the read out information only with objects (12) of a preset movement pattern and **in that** the optoelectronic sensor (24) is a laser scanner which is made for monitoring a monitored plane divided into fields (I-VI), wherein the movement pattern is fixed by an order of the fields (I-VI) contacted sequentially by the object (12).

2. A device (10) in accordance with claim 1,
wherein the control (26) is made only to activate the reading device (16) when the object (12) carries out the preset movement pattern at least in part and/or
wherein the control (26) comprises a memory for read out information and is made to discard read out information if it is identical to information already previously read out.

3. A device (10) in accordance with claim 1 or claim 2,
wherein the preset movement pattern comprises a direction of movement.

4. A device (10) in accordance with any one of the preceding claims,
wherein the control (26) is made to discard read out information if the object (12) does not completely carry out the preset movement pattern.

5. A device (10) in accordance with any one of the preceding claims,
wherein the optoelectronic sensor (24) and/or the control (26) ise made for the determination of a geometry class, and wherein in particular a person, a loaded loading unit or an unloaded loading unit such as a pallet respectively forms a geometry class.

6. A device (10) in accordance with claim 5,
wherein the control (26) is made to activate the reading device only for objects of a preset geometry class and/or only to evaluate the read out information of an object (12) of a preset geometry class.

7. A device (10) in accordance with claim 5 or 6,
wherein the geometry class is fixed with reference to the fields (I-VI) simultaneously swept over by the object (12).

8. A device (10) in accordance with any one of the preceding claims,
wherein the preset movement pattern is fixed by the entry into a first field (I), the movement into a second field (II) first and then into a third field (III) and the exiting of the third field (III), with the control (26) in particular being made only to activate the reading device (16) on the movement into the second field (II) and/or to discard the read out information if the object (12) does not first move into the third field (III) and subsequently exit it again after the activation of the reading device (16).

9. A device (10) in accordance with any one of the preceding claims,
wherein the control (26) is made to determine and to record the travel path of vehicles carrying objects (12) by means of a transponder (14) of the vehicle.

10. A device (10) in accordance with any one of the preceding claims,
wherein a plurality of optical sensors (24, 25), in particular a plurality of laser scanners, are provided and these sensors comprise fields (I-VI) in at least two rows (I-III; IV-VI) disposed next to one another for the recognition of more complex movement patterns and/or in at least two planes (I-III; IV-VI) disposed above one another for the recognition of more complex geometry classes.

11. A method for the reading out of information from a transponder (14) arranged at an object (12) by means of a reading device (16) which excites the transponder (14) to radiate the information and which reads out the radiated information,
wherein a movement pattern of the object (12) is determined by means of an optoelectronic sensor (24),
**characterized in that**
the read out information is only evaluated with objects (12) of a preset movement pattern, in particular a preset direction of movement, and **in that** the optoelectronic sensor (24) is a laser scanner with a range of view divided into fields, wherein the movement pattern is fixed by an order of the fields contacted sequentially by the object (12).

12. A method in accordance with claim 11,
wherein the laser device (16) is only activated when the object (12) carries out the preset movement pattern at least in part and/or read out information is discarded when the object (12) does not completely carry out the preset movement pattern and/or the read out information is discarded when it is identical to stored information already read out previously.

13. A method in accordance with claim 11 or claim 12,
wherein the reading device is only activated for objects (12) of a preset geometry class and/or only the read out information of an object (12) of a preset geometry class is evaluated, wherein in particular a person, a loaded loading unit or an unloaded unit such as a pallet respectively form a geometry class and the geometry class is fixed with reference to the fields simultaneously swept over by the object

14. A method in accordance with claim 13,
wherein, by using a plurality of optoelectronic sensors, fields are provided in at least two rows disposed next to one another for the recognition of more complex movement patterns and/or in at least two planes for the recognition of more complex geometry classes.

15. A method in accordance with claim 14,
wherein the preset movement pattern is fixed by the entry into a first field, the movement into a second field first and then into a third field and the exiting of the third field, with in particular the reading device only being activated on the movement into the second field and/or the read out information being discarded if the object does not move into the third field first and subsequently exit it after the activation of the reading device.

## Revendications

1. Dispositif (10) pour lire des informations à partir d'un transpondeur (14) disposé sur un objet (12), qui présente un capteur (24) optoélectronique, un dispositif de lecture (16), qui peut activer le transpondeur (14) pour émettre les informations et lire l'information diffusée, et une commande (26), qui est conçue pour un amorçage de l'appareil de lecture (16) et du capteur (24) ainsi qu'une analyse des informations lues, le capteur (24) optoélectronique étant conçu pour déterminer un modèle de déplacement de l'objet (12),
**caractérisé en ce que**
la commande (26) est conçue pour analyser les informations lues uniquement dans le cas d'objets (12) d'un modèle de déplacement prédéterminé et **en ce que** le capteur (24) optoélectronique est un scanner laser qui est conçu pour un contrôle d'un niveau de contrôle divisé en zones (I-VI), le modèle de déplacement étant défini par une succession des zones (I-VI) touchées les unes après les autres par l'objet (12).

2. Dispositif (10) selon la revendication 1,
la commande (26) étant conçue pour activer le dispositif de lecture (16) uniquement dans le cas où l'objet (12) exécute au moins en partie le modèle de déplacement prédéfini et/ou la commande (26) présentant une mémoire pour des informations lues et étant conçu pour rejeter des informations lues lorsqu'elles sont identiques à des informations déjà lues.

3. Dispositif (10) selon la revendication 1 ou 2,
le modèle de déplacement prédéfini présentant un sens de déplacement.

4. Dispositif (10) selon l'une quelconque des revendications précédentes,
la commande (26) étant conçue pour rejeter des informations lues lorsque l'objet (12) n'exécute pas complètement le modèle de déplacement prédéfini.

5. Dispositif (10) selon l'une quelconque des revendications précédentes, le capteur (24) optoélectronique et/ou la commande (26) étant conçus pour la détermination d'une classe de géométrie, et en particulier à chaque fois une personne, une unité de chargement chargée ou une unité de chargement non chargée comme une palette formant une classe de géométrie.

6. Dispositif (10) selon la revendication 5,
la commande (26) étant conçue pour activer le dispositif de lecture uniquement pour des objets (12) d'une classe de géométrie prédéfinie et/ou analyser uniquement les informations lues d'un objet (12) d'une classe de géométrie prédéfinie.

7. Dispositif (10) selon la revendication 5 ou 6,
la classe de géométrie étant définie à l'aide de zones (I-VI) balayées simultanément par l'objet (12).

8. Dispositif (10) selon l'une quelconque des revendications précédentes,
le modèle de déplacement prédéfini étant défini par l'entrée dans une première zone (I), le passage d'abord dans une seconde zone (II) et ensuite dans une troisième zone (III) et l'abandon de la troisième zone (III), en particulier la commande (26) étant conçue pour activer le dispositif de lecture (16) seulement en cas de passage dans la seconde zone (II) et/ou rejeter l'information lue lorsque, après l'activation du dispositif de lecture (16), l'objet (12) ne passe pas d'abord à la troisième zone (III) et quitte ensuite celle-ci.

9. Dispositif (10) selon l'une quelconque des revendications précédentes,
la commande (26) étant conçue pour déterminer et enregistrer la course de déplacement de véhicules portant des objets (12) au moyen d'un transpondeur (14) du véhicule.

10. Dispositif (10) selon l'une quelconque des revendications précédentes,
plusieurs capteurs (24, 25) optiques, en particulier plusieurs scanners laser étant prévus, et ces capteurs présentant des zones (I-VI) dans au moins deux rangées (I-III ; IV-VI) juxtaposées pour la détection de modèles de déplacement assez complexes et/ou dans au moins deux plans (I-III ; IV-VI) superposés pour la détection de classes de géométrie assez complexes.

11. Procédé pour lire des informations à partir d'un transpondeur (14) disposé sur un objet (12) au moyen d'un dispositif de lecture (16), qui active le transpondeur (14) pour la diffusion des informations et lit l'information diffusée, un modèle de déplacement de l'objet (12) étant déterminé au moyen d'un capteur (24) optoélectronique,
**caractérisé en ce que**
les informations lues ne sont analysées qu'en cas d'objets (12) d'un modèle de déplacement prédéfini, en particulier une direction de déplacement prédéfinie et **en ce que** le capteur (24) optoélectronique est un scanner laser, dont la zone de visibilité est divisée en zones, le modèle de déplacement étant défini au moyen d'une succession des zones touchées successivement par l'objet (12).

12. Procédé selon la revendication 11,
le dispositif de lecture (16) n'étant activé que dans les cas où l'objet (12) exécute au moins partiellement le modèle de déplacement prédéfini et/ou des informations lues sont rejetées lorsque l'objet (12) n'exécute pas complètement le modèle de déplacement prédéfini et/ou les informations lues étant rejetées lorsqu'elles sont identiques à des informations stockées et déjà lues par le passé.

13. Procédé selon la revendication 11 ou 12,
le dispositif de lecture n'étant activé que pour des objets (12) d'une classe de géométrie prédéfinie et/ou seule l'information lue d'un objet (12) d'une classe de géométrie prédéfinie étant analysée, en particulier à chaque fois une personne, une unité de chargement chargée ou une unité de chargement non chargée comme une palette formant une classe de géométrie et la classe de géométrie étant définie à l'aide des zones balayées simultanément par l'objet (12).

14. Procédé selon la revendication 13,
des zones étant prévues, en utilisant une pluralité de capteurs optoélectroniques, dans au moins deux rangées juxtaposées pour détecter des modèles de déplacement assez complexes et/ou dans au moins deux niveaux pour détecter des classes de géométrie assez complexes.

15. Procédé selon la revendication 14,
le modèle de déplacement prédéfini étant défini par l'entrée dans une première zone, le passage d'abord dans une seconde zone et ensuite dans une troisième zone et l'abandon de la troisième zone, en particulier le dispositif de lecture étant activé seulement en cas de passage dans la seconde zone et/ou l'information lue étant rejetée lorsque, après l'activation du dispositif de lecture, l'objet ne passe pas d'abord dans la troisième zone et quitte ensuite celle-ci.
